# FASCICULE DE BREVET EUROPEEN

(11) **EP 0 495 951 B1**
(45) Date de publication et mention de la délivrance du brevet: **20.09.1995**
(21) Numéro de dépôt: 91914229.9
(22) Date de dépôt: 26.07.1991
(51) Int. Cl.: B60N 2/08

(54) **DISPOSITIF DE VERROUILLAGE DE SIEGE DE VEHICULE**
VORRICHTUNG ZUM VERRIEGELN DES FAHRZEUGSITZES
VEHICLE SEAT LOCKING DEVICE

(30) Priorité: 01.08.1990 FR 9009841
(43) Date de publication de la demande: 29.07.1992
(73) Titulaire: MATRA AUTOMOBILE, 75116 Paris (FR)
(72) Inventeur: LEGENDRE, Dominique Société COREA, F-72700 Spay (FR); OZANIC, Valentin Matra Automobile, F-78340 Les Clayes-S/Bois (FR); FALIGAND, Jacky Matra Automobile, F-78340 Les Clayes-S/Bois (FR)
(74) Mandataire: Fort, Jacques
(86) Numéro de dépôt international: FR9100624
(87) Numéro de publication internationale: WO9202384

(56) Documents cités:
- DE-A- 3 621 642
- DE-A- 3 726 711
- FR-A- 1 571 825
- FR-A- 2 493 792
- US-A- 4 257 647

## Description

La présente invention concerne les dispositifs de verrouillage de siège sur un plancher de véhicule.

Dans certains véhicules, les sièges, et plus particulièrement les sièges arrière, peuvent être déplacés pour permettre un aménagement variable du véhicule. Les sièges doivent donc être maintenus au plancher du véhicule par des moyens de fixation non définitifs. Les moyens de fixation les plus utilisés aujourd'hui sont des dispositifs d'encliquetage qui sont souvent longs à mettre en oeuvre et qui ne répondent pas toujours aux normes de sécurité, notamment parce que ces dispositifs sont accessibles à l'occupant du siège pendant le transport, permettant ainsi à ce dernier de pouvoir déverrouiller son siège par inadvertance.

DE-A-3 726 711 (voir en particulier figures 1 et 3) décrit un dispositif de verrouillage d'un pied de siège de véhicule dans lequel la plaque d'ancrage au plancher appartient au pied du siège et présente un écartement vouté recevant le pied ; un crochet d'encliquetage du pied est muni d'une encoche ouverte pour réaliser le verrouillage et le déverrouillage en coopération avec un doigt transversal présenté par le plancher du véhicule.

L'invention vise à fournir un dispositif de verrouillage amélioré par rapport à ceux existants à ce jour. Plus particulièrement, elle vise à atteindre un ou plusieurs des résultats suivants : constituer un dispositif de faible encombrement vertical assurant un verrouillage sûr et cependant facile à désarmer ; constituer un dispositif de verrouillage qui ne peut être aisément désarmé de façon intempestive par les occupants du véhicule ; fournir un dispositif de verrouillage qui n'est désarmable que lorsque le véhicule est dans une situation qui ne se rencontre normalement pas en marche.

Dans ce but, l'invention propose notamment un dispositif de verrouillage d'un pied de siège de véhicule comprenant une platine munie d'au moins un évidement de réception d'un pied de siège et au moins un coulisseau muni d'au moins une encoche ouverte en L, guidé dans la platine de façon à pouvoir se déplacer entre une position où la branche ouverte de l'encoche est en regard de l'évidement et libère un passage pour un doigt transversal du pied et une position de verrouillage dans laquelle la branche fermée de l'encoche est en regard de l'évidement et interdit le dégagement du doigt, des moyens étant prévus pour solliciter le coulisseau vers la position de verrouillage ou l'y maintenir. Les moyens pour solliciter le coulisseau vers sa position de verrouillage peuvent être constitués par un ou plusieurs ressorts de rappel, un tel dispositif peut être prévu de façon que son désarmement manuel soit difficile et ne puisse intervenir par inadvertance. Ce résultat peut être atteint par l'utilisation d'un ressort de rappel énergique, par l'impossibilité d'exercer manuellement sur le coulisseau une force l'écartant de sa position de verrouillage ou par d'autres moyens encore.

Les moyens de supprimer ou de surmonter l'action du ressort de rappel peuvent avoir des constitutions très diverses. Ils peuvent notamment être constituées par un actionneur capable d'exercer sur le coulisseau une force à l'encontre de celle du ressort de rappel. Cet actionneur peut être un vérin électromagnétique ou un élément pneumatique. Dans le second cas, la source d'énergie peut être constituée par la dépression à l'aspiration du moteur ou par la pression fournie par un compresseur de bord.

Les conditions de déverrouillage du siège seront avantageusement constituées par l'ouverture d'une porte du véhicule. Cette porte peut par exemple être soit n'importe quelle porte, soit une de celles qui correspondent à la rangée occupée par le siège à déverrouiller (porte arrière ou porte de hayon par exemple).

Dans le cas d'un actionneur électrique, le déverrouillage sera par exemple commandé par l'ouverture d'un interrupteur de porte alors que la clé de contact a été mise sur la position de "marche".

Dans le cas d'un actionneur pneumatique, la condition de déverrouillage pourra être l'ouverture d'une porte, commandant l'ouverture d'une électrovanne de liaison entre l'actionneur et une source de dépression, telle qu'un réservoir relié à l'aspiration du moteur.

L'invention propose également un dispositif de verrouillage de siège de véhicule comprenant une platine munie d'au moins un évidement de réception d'un pied de siège et dans laquelle un élément constitué par un coulisseau muni d'une encoche en L est déplaçable par un actionneur à partir d'une position de verrouillage du pied, vers laquelle il est repoussé par des moyens de rappel, et dans laquelle une branche fermée de l'encoche interdit la sortie du pied hors de l'évidement, jusqu'à une position de déverrouillage où une branche ouverte de l'encoche est en face de l'évidement, l'actionneur n'étant commandé que lorsqu'est remplie une condition qui n'existe normalement que lorsque le véhicule est à l'arrêt. Ladite condition peut être l'ouverture d'une porte.

L'invention sera mieux comprise à la lecture de la description qui suit de modes particuliers de réalisation, donnés à titre d'exemple non limitatifs. La description se réfère aux dessins qui l'accompagnent, dans lesquels :
- les figures 1 et 2 sont des schémas en perspective et en coupe partielle des parties mécanique et pneumatique d'un dispositif de verrouillage de siège, respectivement en position déverrouillée et verrouillée ;
- la figure 3 est une vue en perspective montrant la platine du dispositif des figures 1 et 2 ;
- les figures 4 et 5 sont des vues en coupe longitudinale de dispositifs constituant des modes de réalisation de l'actionneur des figures 1 et 2 ;
- la figure 6 est un schéma en perspective montrant un montage possible d'un dispositif du genre illustré en figure 4 pour retenir le pied arrière d'un siège d'automobile ; et
- la figure 7 est une vue en coupe longitudinale montrant les diverses positions que peut prendre le siège de la figure 6 lorsqu'il est équipé d'un dispositif de verrouillage du pied arrière.

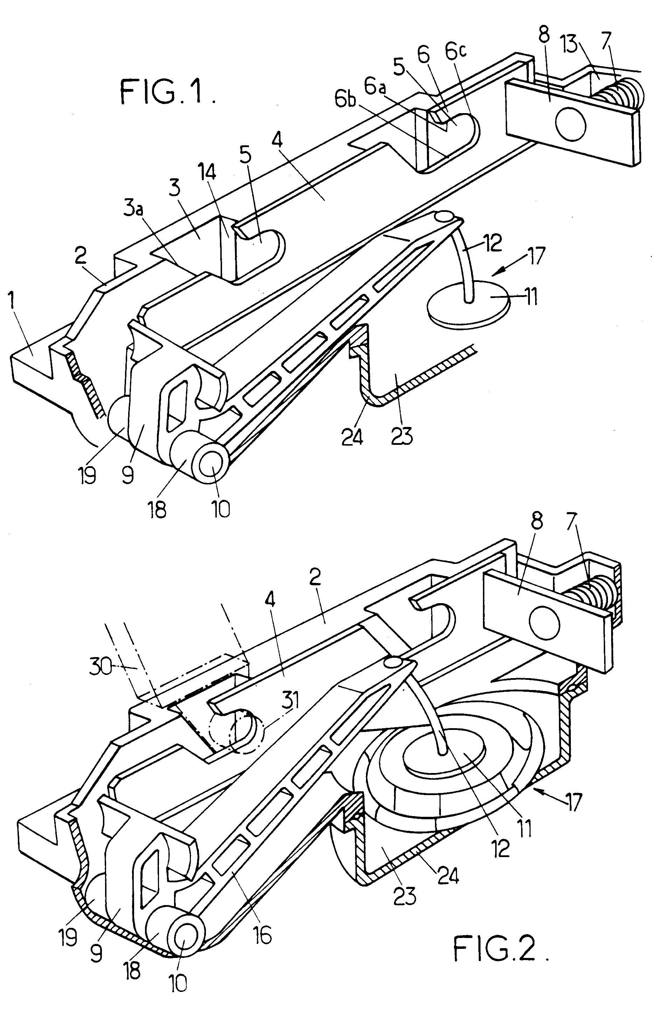

Le dispositif de verrouillage montré en figures 1 à 3 comporte une platine 1 destinée à être fixée de manière inamovible sous le plancher d'un véhicule. La platine 1 comporte deux parois latérales 2 munies d'échancrures ou évidements 3. La platine des figures 1 à 3 comporte deux jeux d'évidement ayant la même forme en V. La pointe du V est arrondie et destinée à épouser la forme d'un élément solidaire d'un pied de siège qui y est introduit. La figure 2 montre, en traits mixtes, une fraction d'un pied 30 de siège destiné à s'inséré dans une échancrure 3, ainsi qu'un doigt ou pion transversal de verrouillage 31 fixé au pied. Un coulisseau 4 est placé entre les parois 2 de la platine. Des rainures (non représentées) ou un couvercle de la platine ne lui permettre de se déplacer que dans le sens longitudinal, c'est-à-dire orthogonalement à la direction d'insertion du pied. Dans le coulisseau sont ménagées des encoches 5 présentant une branche qui s'ouvre vers le haut et une branche fermée, sensiblement parallèle au sens des déplacements du coulisseau. Cette branche, de forme oblongue, est délimitée par un nez en saillie 6.

Le coulisseau 4 porte une plaque 8 soumise à l'action de moyens élastiques de rappel 7. Dans le cas illustré sur les figures 1 et 2, le moyen élastique est constitué par un ressort comprimé entre la plaque 8 et la platine, tendant à repousser le coulisseau vers la position où il est montré en figure 2. Le ressort de rappel peut être maintenu en position, dans le sens axial, par un téton fixé à la plaque 8 et une encoche 13 ménagée dans la platine.

Le dispositif des figures 1 et 2 comprend encore un levier 9 en forme de L, présentant une branche reliée à un actionneur 17 et une branche d'appui sur le coulisseau 4. Ce levier est monté sur un axe de pivotement 10 qui, dans le cas illustré, repose sur le fond de la platine par des manchons 18 et 19. Ces manchons sont constitués en un matériau capable de s'étirer pour permettre leur montage sur l'axe, puis de se serrer pour retenir le levier sur l'axe.

L'actionneur 17 est prévu pour exercer une force supérieure à celle des moyens élastiques de rappel 7 et pour déplacer le coulisseau de la position montrée en figure 2 à la position montrée en figure 1. Il peut avoir des constitution très diverses. Les coulisseaux montrés à titre d'exemples sur les figures 1, 2, 4 et 5 sont à commande pneumatique. Dans le cas des figures 2 et 4, cet actionneur 17 comprend un corps 24 en forme de cuvette, dont le bord s'applique contre un bord circulaire de la platine en pinçant la périphérie d'une membrane déformable 20. La partie centrale de la membrane est emprisonnée entre deux coupelles. La coupelle arrière 11 est reliée au bras le plus long du levier en L 16 par un lien 12 présentant une souplesse en flexion suffisante pour tolérer les déplacements relatifs de la coupelle et du levier.

La chambre 23 délimitée par la membrane 20 et le corps 24 est prévue pour être reliée soit à la pression atmosphérique, soit à une source de dépression. Dans le cas illustré schématiquement sur la figure 4, le corps 24 est muni d'une prise de raccordement à un tuyau 21. Ce tuyau est relié à son tour, par une électrovanne 22, soit à une source de vide, soit à l'atmosphère. La source de vide peut être constituée par un réservoir R relié à l'aspiration du moteur par l'intermédiaire d'un clapet anti-retour. L'électrovanne 22 est alimentée par l'intermédiaire d'un interrupteur qui se ferme lorsqu'une portière est ouverte. Elle passe alors de la position montrée en figure 4 à la position pour laquelle elle relie la chambre 23 au réservoir R.

Lorsque la chambre 23 de l'actionneur est à la pression atmosphérique, les moyens élastiques de rappel maintiennent le coulisseau 4 et le levier 9 dans la position montrée en figures 2 et 4. Les évidements 3 sont alors disposés en regard de la branche fermée des échancrures ou encoches du coulisseau 4. Le doigt de verrouillage du pied est alors emprisonné entre les bords 3a, 6a, 6b, 6c de la platine et du coulisseau (figure 1).

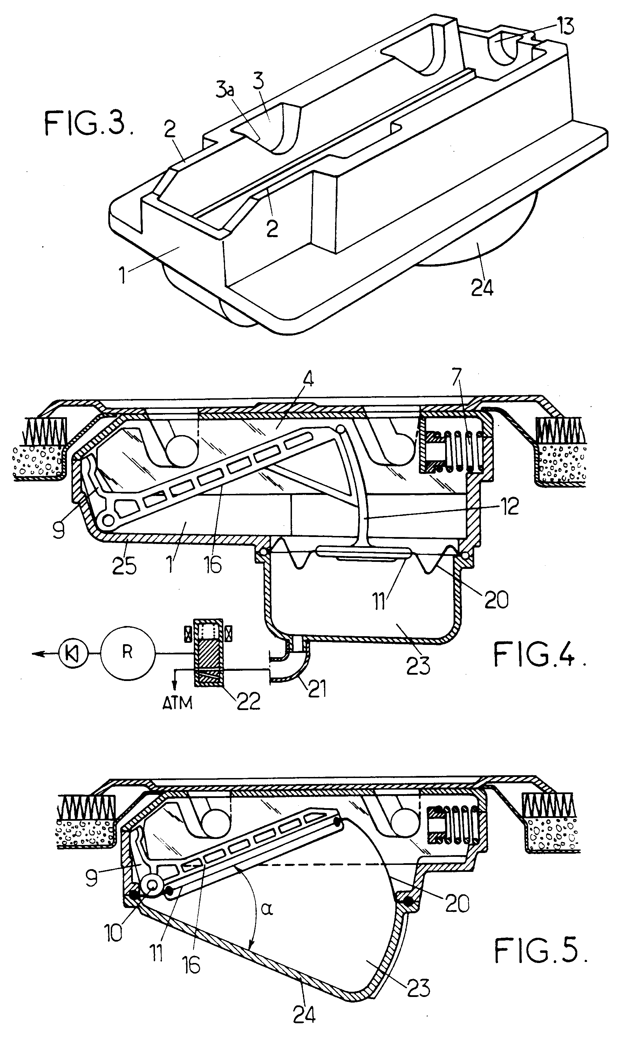

Pour dégager le siège, la chambre 23 doit être mise en dépression ce qui implique, dans le cas qui vient d'être exposé, que le moteur soit en marche et qu'une porte soit ouverte. La pression différentielle exercée sur la membrane 20 déplace la coupelle vers le fond du corps 24. La coupelle 11 entraîne le levier 9 et celui-ci repousse le coulisseau 4 dans une position où la branche ouverte de l'encoche 5 est en regard de l'évidement ou des évidements 3. Il est alors possible d'extraire le pied de siège. Dans la variante de réalisation montrée en figure 5, la coupelle 11 de l'actionneur est placée directement sous la branche longue 16 du levier 9. La membrane 20 doit alors avoir une forme lui permettant de suivre le débattement angulaire du levier sur la totalité de l'angle α indiqué en figure 5.

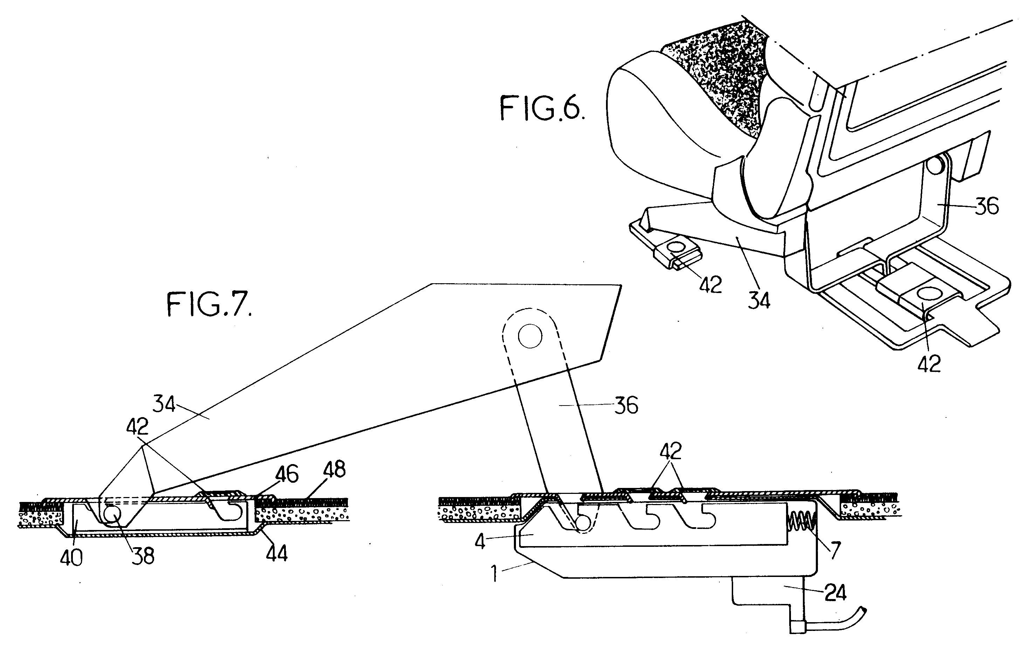

La figure 6 montre, à titre d'exemple, le montage d'un dispositif pour immobiliser l'ossature d'un siège ayant une embase 34 présentant les deux pieds avant du siège et une fourche 36 portant un pied arrière. Chacun des pieds avant comporte un doigt transversal 38 pouvant s'engager dans une encoche en forme de L d'une platine 40. La platine 40 montrée en figure 7 comporte deux encoches et permet en conséquence de choisir la position du siège. L'encoche inutilisée peut être fermée par un cache 42. La platine est portée par le plancher 44 du véhicule et recouverte d'un couvercle 46 venant s'appuyer sur la moquette 48.

Le pied central de la fourche arrière 36 porte lui aussi un doigt de verrouillage 31 et peut s'engager dans n'importe lequel des trois jeux d'évidement de la platine 1. Là encore, les jeux non utilisés peuvent être fermés par des caches 42. Lorsque le coulisseau 4 est en position avancée, il interdit l'enlèvement du pied 36.

## Revendications

1. Dispositif de verrouillage d'un pied de siège de véhicule, comprenant une platine (1) munie d'au moins un évidement (3) de réception d'un pied de siège et au moins un coulisseau (4) muni d'au moins une encoche ouverte en L (5), guidé dans la platine de façon à pouvoir se déplacer entre une position où la branche ouverte de l'encoche est en regard de l'évidement et libère un passage pour un doigt transversal du pied et une position de verrouillage dans laquelle la branche fermée de l'encoche (5) est en regard de l'évidement et interdit le dégagement du doigt, des moyens (7) étant prévus pour solliciter le coulisseau vers la position de verrouillage ou l'y maintenir.

2. Dispositif selon la revendication 1, caractérisé en ce qu'il comprend un actionneur (17) permettant d'exercer sur le coulisseau (4) une force d'amenée en position de déverrouillage.

3. Dispositif selon la revendication 2, caractérisé en ce que l'actionneur est un vérin électromagnétique.

4. Dispositif selon la revendication 2, caractérisé en ce que l'actionneur est un élément pneumatique dont la source d'énergie est la dépression à l'aspiration du moteur.

5. Dispositif selon la revendication 2, caractérisé en ce qu'il comprend un levier (9) articulé sur la platine (1), pouvant pivoter contre l'action desdits moyens élastiques de rappel (7) pour amener le coulisseau (4) dans la position de déverrouillage sous l'action de l'actionneur.

6. Dispositif selon la revendication 2, caractérisé en ce que l'actionneur est rendu actif par l'ouverture d'une porte du véhicule.

7. Dispositif de verrouillage de siège de véhicule comprenant une platine (1) munie d'au moins un évidement (3) de réception d'un pied de siège et dans laquelle un élément (4) constitué par un coulisseau muni d'une encoche en L est déplaçable par un actionneur (17) à partir d'une position de verrouillage du pied, vers laquelle il est repoussé par des moyens de rappel, et dans laquelle une branche fermée de l'encoche interdit la sortie du pied hors de l'évidement, jusqu'à une position de déverrouillage où une branche ouverte de l'encoche est en face de l'évidement, l'actionneur (17) n'étant commandé que lorsqu'est remplie une condition qui n'existe normalement que lorsque le véhicule est à l'arrêt.

8. Dispositif selon la revendication 7, caractérisé en ce que ladite condition est l'ouverture d'une porte.

## Claims

1. Locking device for a vehicle seat leg, comprising a lock plate (1) fitted with at least one recess (3) for receiving a seat leg and at last one slide (4), fitted with at least one open L-shaped notch (5), guided into the lock plate to be displaceable between a position where the open branch of the notch faces the recess and clears a passage for a transversal finger of the leg and a locking position in which the closed branch of the notch (5) faces the recess and prevents the finger from being released, means (7) being provided to bias the slide toward the locking position or to keep it there.

2. Device according to claim 1, characterized in that it includes an actuator (17) making it possible to exert on the slide (4) a force to bring the slide into unlocking position.

3. Device according to claim 2, characterized in that the actuator is an electromagnetic actuator.

4. Device according to claim 2, characterized in that the actuator is a pneumatic element whose power source is the depression at the intake of the engine.

5. Device according to claim 2, characterized in that it includes a lever (9) hinged to the lock plate (1), capable of pivoting against the action of the resilient return mechanisms (7) to bring the slide (4) into the unlocking position under the action of the actuator.

6. Device according to claim 2, characterized in that the actuator is energized by opening a door of the vehicle.

7. Device for locking the seat of a vehicle including a lock plate (1) fitted with at least one recess (3) for receiving a seat leg and in which an element (4) constituted by a slide with a L-shaped slot is displaceable by an actuator (17) from a locking position of the leg, toward which it is biased by return means, and in which a closed portion of the slot prevents the leg from leaving the recess, to an unlocking position where an open portion of the slot faces the recess; the actuator (17) being only energized when fulfills condition is fullfilled which normally exists only when the vehicle is stopped.

8. Device according to claim 7, characterized in that said condition is the opening of a door.

## Patentansprüche

1. Vorrichtung zum Verriegeln eines Fahrzeugsitzes, welche eine Grundplatte (1), die mit mindestens einer Vertiefung (3) zur Aufnahme eines Sitzfußes versehen ist und mindestens eine Kulisse (4) aufweist, die mit mindestens einer offenen L-förmigen Aussparung (5) versehen ist und in der Grundplatte geführt ist, um zwischen einer Position, in welcher der offene Schenkel der Aussparung der Vertiefung gegenüberliegt und einen Durchgang für einen Querzapfen des Fußes freigibt, und einer Verriegelungsposition verschoben werden zu können, in welcher der geschlossene Schenkel der Aussparung (5) der Vertiefung gegenüberliegt und das Freikommen des Zapfens versperrt, wobei Mittel (7) vorgesehen sind, um die Kulisse in Richtung der Verriegelungsposition zu belasten, oder um sie festzuhalten.

2. Vorrichtung nach Anspruch 1, dadurch gekennzeichnet, daß sie ein Betätigungselement (17) aufweist, um auf die Kulisse (4) eine Stellkraft in eine Entriegelungsposition auszuüben.

3. Vorrichtung nach Anspruch 2, dadurch gekennzeichnet, daß das Betätigungselement ein elektromagnetisches Stellglied ist.

4. Vorrichtung nach Anspruch 2, dadurch gekennzeichnet, daß das Stellglied ein pneumatisches Element ist, dessen Energiequelle der Ansaugunterdruck des Motors ist.

5. Vorrichtung nach Anspruch 2, dadurch gekennzeichnet, daß sie einen Gelenkhebel (9) auf der Grundplatte (1) aufweist, der gegen der Wirkung der Rückstellfedermittel (7) schwenken kann, um die Kulisse (4) unter der Wirkung des Betätigungselements in die Entriegelungsposition zu bringen.

6. Vorrichtung nach Anspruch 2, dadurch gekennzeichnet, daß das Betätigungselement durch das Öffnen einer Fahrzeugtür aktiv gemacht wird.

7. Vorrichtung zum Verriegeln eines Fahrzeugsitzes, welche eine Grundplatte (1) aufweist, die mit mindestens einer Vertiefung (3) zur Aufnahme eines Fußsitzes (10) versehen ist, und in welcher ein Element (4), das durch eine mit einer L-förmigen Aussparung versehene Kulisse gebildet ist, durch ein Betätigungselement (17) von einer Verriegelungsposition des Fußes, in welche sie durch Rückstellmittel gedrückt wird, und in welcher ein geschlossener Schenkel des Ausschnitts das Freikommen des Fußes aus der Vertiefung versperrt, bis in eine Entriegelungsposition verschiebbar ist, in welcher ein offener Schenkel des Ausschnitts der Vertiefung gegenüberliegt, wobei das Betätigungselement (17) nur betätigt wird, wenn eine Bedingung erfüllt ist, welche normalerweise nur besteht, wenn das Fahrzeug steht.

8. Vorrichtung nach Anspruch 7, dadurch gekennzeichnet, daß die besagte Bedingung das Öffnen einer Tür ist.
